# EUROPÄISCHE PATENTANMELDUNG

(11) **EP 3 715 206 A1**
(43) Veröffentlichungstag der Anmeldung: **30.09.2020**
(21) Anmeldenummer: 20162128.1
(22) Anmeldetag: 10.03.2020
(51) Int. Cl.: B60W 50/02, B60W 10/06, B60W 10/08

(54) **VERFAHREN ZUM TESTEN EINES ANTRIEBSSTRANGS EINES FAHRZEUGS**

(30) Priorität: 21.03.2019 DE 102019203864
(71) Anmelder: Robert Bosch GmbH, 70442 Stuttgart (DE)
(72) Erfinder: Fassnacht, Jochen, 75365 Calw (DE); Maier, Marcel, 70825 Korntal-Muenchingen (DE)

(57) **Zusammenfassung**

Die vorliegende Erfindung betrifft ein Verfahren (100) zum Testen eines Antriebssystems (20) eines Fahrzeugs (10), insbesondere eines Hybridfahrzeugs oder eines Elektrofahrzeugs, wobei das Fahrzeug eine Mehrzahl von Antriebsmaschinen (11, 12) aufweist, umfassend die Schritte: Ermitteln (1) einer Notwendigkeit des Testens, Abrufen (2) eines ersten Solldrehmoments (Msoll) an einer ersten Antriebsmaschine (11), Ermitteln (3) eines ersten Istdrehmoments (M11) der ersten Antriebsmaschine (11), Durchführen eines Soll-Ist-Vergleichs (4) des ersten Istdrehmoments (M11) mit dem ersten Solldrehmoment (Msoll), und Erkennen (5), ob ein Defekt des Antriebssystems (20) vorliegt, basierend auf dem Soll-Ist-Vergleich (4).

## Beschreibung

### Stand der Technik

Die vorliegende Erfindung betrifft ein Verfahren zum Testen eines Antriebssystems eines Fahrzeugs sowie ein Verfahren zum Betreiben des Fahrzeugs.

Bekannt ist eine direkte Diagnose von Defekten in Antriebssträngen von Fahrzeugen mittels Sensoren und Aktoren in der Hardware und Software des Fahrzeugs. Beispielsweise ist es bekannt, mittels einer Strommessung an einem Elektromotor direkt auf eine Funktionsfähigkeit des Motors zu schließen. Dabei können jedoch in einem Fahrbetrieb in der Regel nur die momentanen vorliegenden Eigenschaften des Antriebs überprüft werden, welche in Abhängigkeit der Randbedingungen, wie Geschwindigkeit, Beladung des Fahrzeugs, Steigung der Straße, Fahrtwind etc., stark variieren können.

### Offenbarung der Erfindung

Das erfindungsgemäße Verfahren mit den Merkmalen des Anspruchs 1 bietet demgegenüber den Vorteil einer verbesserten Diagnose von Fehlern und Defekten eines Antriebssystems eines Fahrzeugs. Dabei können Defekte unabhängig von durch einen Fahrbetrieb des Fahrzeugs vorgegebenen Randbedingungen sicher und zuverlässig erkannt werden. Vor allem ist es auch möglich, schlafende Fehler sicher und zuverlässig zu erkennen. Als schlafender Fehler wird ein Defekt angesehen, welcher bei bestimmten Betriebszuständen, beispielsweise bei einem Fahrbetrieb mit geringer Leistung und Geschwindigkeit, unentdeckt bliebt und das Antriebssystem zunächst nicht beeinträchtigt, jedoch bei einer späteren Fahrsituation zu Tage tritt und zu einem Komplettausfall des Antriebssystems führen kann. Beispielsweise kann der Defekt eines Kühlsystems oder einzelner Transistoren einer Leistungselektronik einen solchen schlafenden Fehler darstellen. Tritt ein solcher Defekt ein, kann es beispielsweise beim Betreiben des Fahrzeugs mit geringer Leistung dazu führen, dass der Defekt nicht erkannt wird. Ist beispielsweise einer von mehreren parallel geschalteten Transistoren der Leistungselektronik defekt, kann der notwendige Strom bei geringer Last unter Umständen noch von den verbleibenden Transistoren geführt werden. Wird sodann eine hohe Leistung angefordert, kommt es aufgrund eines hohen Stroms zu einer Überlastung der verbleibenden betroffenen Bauteile und der Defekt führt zu einem kompletten Ausfall des Antriebssystems. Das erfindungsgemäße Verfahren bietet dabei den Vorteil, dass auch solche schlafenden Fehler zuverlässig und möglichst frühzeitig erkannt werden. Dies wird erfindungsgemäß erreicht durch ein Verfahren zum Testen eines Antriebssystems eines Fahrzeugs, welches eine Mehrzahl von Antriebsmaschinen aufweist. Bevorzugt sind dabei alle Antriebsmaschinen identisch, also baugleich. Die Antriebsmaschinen sind vorteilhafterweise redundant. Das heißt, bei einem Komplettausfall einer Antriebsmaschine steht zumindest eine weitere Antriebsmaschine zur Verfügung, welche einen Antrieb des Fahrzeugs erzeugen kann, sofern die Letztere fehlerfrei ist. Bei dem Fahrzeug handelt es sich vorzugsweise um ein Hybridfahrzeug, ein Brennstoffzellenfahrzeug oder um ein Elektrofahrzeug. Somit sind die Antriebsmaschinen vorteilhafterweise Elektromotoren zum Antrieb des Fahrzeugs. Das Verfahren umfasst die Schritte:
- Ermitteln einer Notwendigkeit des Testens,
- Abrufen eines ersten Solldrehmoments an einer ersten Antriebsmaschine,
- Ermitteln eines ersten Istdrehmoments der ersten Antriebsmaschine,
- Durchführen eines Soll-Ist-Vergleichs des ersten Istdrehmoments mit dem ersten Solldrehmoment, und
- Erkennen, ob ein Defekt des Antriebssystems vorliegt, basierend auf dem Soll-Ist-Vergleich.

In anderen Worten wird bei dem Verfahren ein Test auf Defekte des Antriebssystems durchgeführt, indem zuerst eine Bedingung für das Durchführen des Tests festgestellt wird. Im Ansprechen darauf wird eine vorbestimmte Last an der ersten Antriebsmaschine in Form des ersten Solldrehmoments abgerufen. Zeitgleich erfolgt eine Überprüfung dahingehend, ob die erste Antriebsmaschine dieses erste Solldrehmoment tatsächlich bereitstellen kann. Hierfür wird das tatsächlich erreichte erste Istdrehmoment, also das unter den aktuellen BetriebsBedingungen tatsächlich auftretende momentane Istdrehmoment der ersten Antriebsmaschine, ermittelt. Das ermittelte Istdrehmoment wird anschließend in dem Soll-Ist-Vergleich mit dem theoretischen ersten Solldrehmoment verglichen. Fällt dieser Soll-Ist-Vergleich positiv aus, das heißt das erste Istdrehmoment entspricht im Wesentlichen dem ersten Solldrehmoment, dann ist dies ein Hinweis darauf, dass das Antriebssystem fehlerfrei arbeitet und kein Defekt vorliegt. Sofern der Soll-Ist-Vergleich negativ ausfällt, also das erste Istdrehmoment und das erste Solldrehmoment deutlich voneinander abweichen, kann hieraus auf einen Defekt des Antriebssystems geschlossen werden.

Das Verfahren bietet somit eine besonders einfache und sichere Möglichkeit einer Diagnose von im Antriebssystem des Fahrzeugs vorhandenen Defekten, insbesondere von Erstfehlern. Eine unzulässige Reduzierung einer Antriebsleistung oder eines Antriebsmoments des Fahrzeugs kann durch das Verfahren frühzeitig und zuverlässig erkannt werden, um kritische Fahrsituationen zu vermeiden oder um frühzeitig Maßnahmen zur Vermeidung solcher kritischen Fahrsituation einzuleiten. Zudem ist eine frühzeitige Behebung des Defekts möglich, um darauf basierende weitere Defekte oder unter Umständen den Komplettausfall des Antriebssystems zu vermeiden.

Insbesondere ermöglicht das Verfahren eine zuverlässige Fehlerdiagnose, um in Hinblick auf einen Fahrbetrieb des Fahrzeugs ein Erreichen einer optimalen Fail-Operational-Strategie zu ermöglichen. Diese Fail-Operational-Strategie sieht vorteilhafterweise vor, dass bei einem Vorliegen eines Defekts ein Missionsabbruch, also ein Notbetrieb mit verminderter Leistung zum schnellstmöglichen Erreichen einer sicheren Park- bzw. Haltemöglichkeit, vorgenommen wird. Dabei wird durch die zumindest eine redundante und nicht defekte Antriebsmaschine weiterhin zumindest über einen vordefinierten Zeitraum ein Antrieb des Fahrzeugs sichergestellt, um beispielsweise eine sichere Parkposition anzusteuern.

Durch das erfindungsgemäße Verfahren werden dabei auch üblicherweise schwer oder gar nicht zu erkennende Defekte, wie beispielsweise schlafende Fehler, einfach und sicher erkannt. Dadurch wird möglichst vermieden, dass mehrere teilweise schlafende Defekte in mehreren unterschiedlichen Antriebsmaschinen gleichzeitig vorliegen und somit zum Komplettausfall des Antriebssystems führen. Dies führt dazu, dass beispielsweise eine Gefahr für liegengebliebene Fahrzeuge und damit einhergehend Staus und kritische Gefahrensituationen verringert wird. Zudem sind durch die zuverlässige und eindeutige Fehlerdiagnose geringere Anforderungen an das Fahrzeug zum Einhalten der Fail-Operational-Strategie, insbesondere eine geringere Überauslegung des Antriebssystems, erforderlich.

Die Unteransprüche zeigen bevorzugte Weiterbildungen der Erfindung.

Bevorzugt wird das Verfahren während eines Fahrbetriebs des Fahrzeugs ausgeführt. Somit kann die Durchführung der Fehlerdiagnose einfach und für einen Nutzer des Fahrzeugs unauffällig und besonders komfortabel in den normalen Fahrbetrieb des Fahrzeugs integriert sein. Besonders vorteilhaft ist es dabei, wenn das Verfahren vollständig automatisiert während des Fahrbetriebs ausgeführt wird. Ein explizites Ansteuern eines Testbetriebs, oder insbesondere ein Aufsuchen einer Fahrzeugwerkstatt, zum Testen des Antriebssystems ist somit nicht erforderlich.

Vorzugsweise beträgt das erste Solldrehmoment mindestens 75%, insbesondere mindestens 90 % eines theoretischen Maximaldrehmoments der ersten Antriebsmaschine. Besonders vorteilhaft ist es, wenn das erste Sollmoment 100% des theoretischen Maximaldrehmoments beträgt, das heißt, wenn ein Volllastbetrieb der ersten Antriebsmaschine abgerufen wird. Das theoretische Maximaldrehmoment ist dabei das maximale theoretisch mögliche Drehmoment, das die erste Antriebsmaschine erzeugen kann, wenn diese keinen Defekt aufweist. Durch ein hohes Solldrehmoment wird erzwungen, dass die erste Antriebsmaschine eine hohe Last aufbringt. Dadurch kann das Vorliegen von Defekten im Antriebstrang besonders gut erkannt werden, da durch das hohe Solldrehmoment eine hohe Belastung der Antriebsmaschine bewirkt wird, welche jegliche Defekte zuverlässig aufdeckt. Mögliche schlafende Defekte werden dadurch erkennbar. Unter Umständen wird somit insbesondere provoziert, dass ein Teil des Antriebssystems mit einem vorhandenen schlafenden Fehler durch das hohe Solldrehmoment so stark belastet wird, dass sich der vorhandene Defekt verstärkt und zu einem Ausfall des betroffenen Teils des Antriebssystems führt. Zumindest wird sich jedoch bei einer solchen hohen Last der ersten Antriebsmaschine ein Defekt auf das Istdrehmoment auswirken, sodass durch den Soll-Ist-Vergleich eindeutig erkannt wird, dass der Defekt vorliegt. Weiterhin ist es vorteilhaft, wenn das Erkennen des Defekts basierend auf einer Abweichung beim Soll-Ist-Vergleich erfolgt. Das Antriebssystem wird dabei als "defekt" eingestuft, wenn die Abweichung mindestens 10 %, besonders bevorzugt mindestens 5 % beträgt. Um eine besonders feine Erkennung bereitzustellen, kann das Erkennen der Defekte vorteilhafterweise basierend auf einer Abweichung ab mindestens 2 % beim Soll-Ist-Vergleich erfolgen.

Besonders bevorzugt ist ein Gesamt-Drehmoment definiert, welches in einer Fahrsituation zum Vortrieb des Fahrzeugs erforderlich ist. Ein Differenzdrehmoment aus Gesamt-Drehmoment und erstem Solldrehmoment wird dabei durch die restlichen Antriebsmaschinen bereitgestellt. Das heißt, das Gesamt-Drehmoment ist die Summe aus Differenzdrehmoment und Solldrehmoment. Das Differenzdrehmoment ist wiederum die Summe aller Drehmomente der verbleibenden Antriebsmaschinen bis auf die erste Antriebsmaschine. Die Aufteilung des Differenzdrehmoments auf die verbleibenden Antriebsmaschinen kann dabei beliebig erfolgen. Für den Fall, dass das Gesamt-Drehmoment größer als das erste Solldrehmoment ist, ist es besonders günstig möglich, dass die restlichen Antriebsmaschinen motorisch arbeiten und ein positives Drehmoment, also zum Vortrieb des Fahrzeugs, erzeugen.

Weiter bevorzugt erfolgt das Abrufen des ersten Solldrehmoments durch Betreiben einer zweiten Antriebsmaschine in einem generatorischen Betrieb. Das heißt, an der zweiten Antriebsmaschine wird ein vordefiniertes Bremsmoment abgerufen, sodass die zweite Antriebsmaschine entgegen der ersten Antriebsmaschine arbeitet. Dies ist insbesondere günstig für den Fall, dass das Gesamt-Drehmoment kleiner als das erste Solldrehmoment ist, also das Fahrzeug insgesamt nur eine niedrige Leistung zum Vortrieb anfordert, beispielsweise bei langsamer Fahrt. Dadurch, dass die zweite Antriebsmaschine in dem generatorischen und/oder bremsenden Betrieb betrieben wird, kann weiterhin das vordefinierte hohe erste Solldrehmoment an der ersten Antriebsmaschine abgerufen werden. Somit kann in jeder Fahrsituation, insbesondere auch bei langsamer Fahrt, der Test auf Defekte des Antriebssystems durchgeführt werden, ohne dass beispielsweise eine Beschleunigung des Fahrzeugs zum Abrufen des ersten Solldrehmoments erforderlich ist.

Vorzugsweise wird das Solldrehmoment abwechselnd an jeder der Antriebsmaschinen abgerufen. Dabei wird für jede der Antriebsmaschinen jeweils ein Soll-Ist-Vergleich eines Istdrehmoments der jeweiligen Antriebsmaschine mit dem Solldrehmoment durchgeführt. Im Ansprechen darauf wird basierend auf jedem der Soll-Ist-Vergleiche jeweils erkannt, ob ein Defekt des Antriebssystems vorliegt. Das Antriebssystem kann somit vollumfänglich getestet werden, um Defekte frühzeitig zu erkennen und um jederzeit die bevorzugte Fail-Operational-Strategie einhalten zu können.

Weiterhin ist es vorteilhaft, wenn das Ermitteln des Istdrehmoments mittels Plausibilisierung von zumindest zwei Antriebsmaschinen gegeneinander erfolgt. Dieses Prinzip der Plausibilisierung basiert dabei insbesondere auf der Annahme, dass zumindest eine der beiden Antriebsmaschine vollständig funktionstüchtig ist, und dass nicht beide Antriebsmaschinen gleichzeitig jeweils einen Defekt aufweisen. Das heißt, zum Ermitteln des Istdrehmoments wird an den beiden Antriebsmaschinen kurz hintereinander, bevorzugt wiederholt, dass Solldrehmoment abgerufen und im Ansprechen darauf durch Vergleich überprüft wird, ob beide Antriebsmaschinen eine gleiche oder zumindest ähnliche Betriebscharakteristik aufweisen, also ob diese plausibel ist. Sofern dies der Fall ist, wird angenommen, dass das Istdrehmoment jeweils in etwa dem Solldrehmoment entspricht und folglich beide Antriebsmaschinen korrekt funktionieren und keine Defekte aufweisen. Hierzu kann bevorzugt eine Fahrzeuggeschwindigkeit oder eine Ableitung der Fahrzeuggeschwindigkeit als mögliches Referenzsignal zur Plausibilisierung des Drehmoments verwendet werden. Bei konstanter Fahrzeugmasse, Luftwiderstand, bzw. Wind und Steigung sowie Bodenbeschaffenheit ist das Moment proportional zu einer Fahrzeugbeschleunigung. Sofern die Betriebscharakteristiken der Antriebsmaschinen jedoch deutlich voneinander abweichen, ist dies ein Hinweis darauf, dass eine der Antriebsmaschinen ein Istdrehmoment aufweist, welches deutlich vom Solldrehmoment abweicht, wodurch entsprechend festgestellt werden kann, dass ein Defekt des Antriebssystems vorliegt. Die Plausibilisierung bietet somit eine besonders einfache und kostengünstige Methode, um mit dem Verfahren festzustellen, ob Defekte des Antriebssystems vorliegen.

Bevorzugt erfolgt das Ermitteln des Istdrehmoments mittels verschiedener Methoden, welche entweder als Alternativen oder auch gleichzeitig zueinander ausgeführt werden können. Diese Methoden lauten:
- Berechnung mit einem Maschinenmodell, und/oder
- Erfassung mittels eines Sensors, und/oder
- Erfassung eines Stroms und/oder einer Spannung an der entsprechenden Antriebsmaschine.

Zur Ermittlung des Istdrehmoments ist somit eine Vielzahl an Möglichkeiten denkbar. Als Sensor können beispielsweise verschiedenste Arten von Sensoren eingesetzt werden, wobei insbesondere eine exakte Messung des Istdrehmoments nicht zwingend erforderlich ist, sondern vor allem eine Abschätzung erreicht werden soll. Beispielsweise können Sensoren verwendet werden, mit denen direkt das entsprechende Istdrehmoment ermittelt wird. Alternativ oder zusätzlich können Beschleunigungssensoren, GPS-Sensoren, oder Sensoren zur Erfassung der Geschwindigkeit oder Drehzahl, insbesondere einer differenzierten Drehzahl, oder ähnliche Sensoren verwendet werden. Besonders günstig ist es dabei, wenn mehrere Möglichkeiten zur Ermittlung des Istdrehmoments miteinander kombiniert werden, um somit eine mehrfach redundante Ermittlung des Istdrehmoments zu erhalten. Durch diese mehrfach redundante Ermittlung kann eine unzulässige Reduktion des Istdrehmoments gegenüber dem Solldrehmoment besonders zuverlässig und sicher festgestellt werden.

Besonders bevorzugt erfolgt das Durchführen des Verfahrens über eine vordefinierte Zeitspanne. Insbesondere liegt die Zeitspanne im Bereich von 2 Sekunden bis 3 Minuten, besonders bevorzugt bei 10 Sekunden. Besonders günstig ist es, wenn das Verfahren wiederholt durchgeführt wird, um mögliche Störungen, wie beispielsweise ein Überfahren von Schlaglöchern, oder einen unregelmäßigen Fahrtwind herauszufiltern. Weiterhin erfolgt das Ermitteln der Notwendigkeit des Testens bevorzugt in vordefinierten Zeitabständen. Insbesondere ist es günstig, wenn die Zeitabstände regelmäßig definiert sind und im Bereich von 5 Minuten bis 60 Minuten, vorzugsweise bei 30 Minuten, liegen. Das heißt, beispielsweise erfolgt während des Fahrbetriebs des Fahrzeugs alle 30 Minuten die Ermittlung der Notwendigkeit zum Testen, wobei im Ansprechen darauf die erforderlichen Schritte des Tests, also das Abrufen des ersten Solldrehmoments, das Ermitteln des ersten Istdrehmoments, das Durchführen des Soll-Ist-Vergleiches, und das Erkennen, ob ein Defekt des Antriebssystems vorliegt, durchgeführt werden. Alternativ zu einer Ermittlung der Notwendigkeit des Testens in regelmäßigen Zeitabständen kann dies bevorzugt auch unregelmäßigen Zeitabständen erfolgen und nach einem vorbestimmten Muster. Besonders günstig ist es, wenn nach einem vordefinierten längeren Zeitintervall, beispielsweise alle 30 Minuten, die Ermittlung der Notwendigkeit des Testens mehrmals kurz hintereinander erfolgt, beispielsweise in einem Abstand von wenigen Sekunden, besonders bevorzugt 3 Sekunden. Weiterhin ist es besonders vorteilhaft, wenn die entsprechenden kurz hintereinander ausgeführten Tests dabei wie im vorangehenden Absatz beschrieben abwechselnd an allen Antriebsmaschinen durchgeführt werden. Alternativ oder zusätzlich zu der Ermittlung der Notwendigkeit des Testens in vordefinierten Zeitabständen kann das Ermitteln der Notwendigkeit des Testens auch ereignisbasiert erfolgen. Beispielsweise kann die Notwendigkeit des Testens im Ansprechen auf bestimmte Fahrsituation, beispielsweise bei einem Bergauffahren, ermittelt werden. Dadurch können beispielsweise Fahrsituationen, in welchen ein hohes Gesamt-Drehmoment gefordert ist, günstig genutzt werden, um mittels der ohnehin bereits vorliegenden hohen Last der Antriebsmaschinen das Verfahren durchzuführen. Somit wäre ein besonders effizienter Fahrbetrieb des Fahrzeugs möglich.

Weiterhin ist es vorteilhaft, wenn das Verfahren ferner den Schritt umfasst: Ermitteln einer Fahrbahnbeschaffenheit. Die Fahrbahnbeschaffenheit kann vorzugsweise mittels eines Fahrdynamikregelungssystems, wie beispielsweise einem Antiblockiersystem, kurz ABS-System, und/oder einem Elektronischen Stabilitätsprogramm, kurz ESP-System, ermittelt werden. Im Ansprechen auf eine Ermittlung der Notwendigkeit des Testens erfolgt dabei eine Unterdrückung des Tests des Antriebsstrangs, sofern eine für die Durchführung des Tests ungeeignete kritische Fahrbahnbeschaffenheit vorliegt. Bevorzugt erfolgt die Unterdrückung des Tests sofern sich aus der Ermittlung der Fahrbahnbeschaffenheit ergibt, dass es eine glatte oder rutschige Fahrbahn, beispielsweise aufgrund von Nässe, Eis oder Schnee, vorliegt. Das heißt, sofern sich das Fahrzeug auf glatter oder rutschiger Fahrbahn befindet, wird der Test des Antriebssystems zumindest so lange nicht ausgeführt, bis wieder eine griffige Fahrbahn vorliegt. Dadurch wird verhindert, dass zu Testzwecken übermäßig große Drehmomente auf das Antriebssystem des Fahrzeugs aufgebracht werden, welche zu einer Beeinträchtigung einer Fahrstabilität des Fahrzeugs oder zu einem Durchdrehen von Rädern führen könnten. Alternativ oder zusätzlich kann eine Unterdrückung des Tests erfolgen, sofern eine kritische fahrdynamische Situation vorliegt. Beispielsweise kann eine solche kritische Fahrsituation ein Durchfahren einer Kurve mit hoher Geschwindigkeit nahe an einer Kurvengrenzgeschwindigkeit darstellen.

Ferner betrifft die Erfindung ein Verfahren zum Betreiben eines Fahrzeugs, insbesondere eines Hybridfahrzeugs oder eines Elektrofahrzeugs. Das Verfahren umfasst den Schritt der Durchführung des vorstehend beschriebenen Verfahrens zur Überwachung eines Antriebssystems des Fahrzeugs. Weiterhin umfasst das Verfahren zum Betreiben des Fahrzeugs ferner die nachfolgenden Schritte, welche ausgeführt werden, sofern ein im Antriebstrang vorliegender Defekt erkannt wird:
- Einleiten eines Notbetriebs des Fahrzeugs, und
- insbesondere Einleiten eines vordefinierten Missionsabbruchs eines autonomen Fahrbetriebs des Fahrzeugs.

Der Notbetrieb des Fahrzeugs ist insbesondere ein Fahrbetrieb des Fahrzeugs mit reduzierter Leistung und Geschwindigkeit, sodass eine sichere Weiterfahrt des Fahrzeugs weiterhin möglich ist und eine Wahrscheinlichkeit für das Auftreten weiterer Defekte möglichst geringgehalten wird. Als autonomer Fahrbetrieb wird außerdem sowohl ein vollständig automatisierter Fahrbetrieb, auch vollautomatisiertes Fahren, VAF genannt, als auch ein teilweise automatisierter Fahrbetrieb, auch hoch automatisiertes Fahren, HAF genannt, angesehen. Als vordefinierter Missionsabbruch wird dabei insbesondere ein gezieltes Ansteuern einer nächstmöglichen und sicheren Parkposition des Fahrzeugs angesehen. Alternativ ist es auch möglich, sofern sich das Fahrzeug nicht in einem autonomen Fahrbetrieb befindet, sondern manuell durch einen Fahrer gesteuert wird, dass im Falle eines erkannten Defekts eine Fehlermeldung angezeigt wird. Die Fehlermeldung informiert den Fahrer über den Defekt, sodass dieser manuell den Fahrbetrieb abbrechen und das Fahrzeug in eine sichere Parkposition steuern kann. Dadurch kann eine Gefahr für ein plötzliches Liegenbleiben des Fahrzeugs aufgrund eines unvorhergesehenen Komplettausfalls des Antriebssystems und damit einhergehend Staus und kritische Gefahrensituationen verringert werden. Zudem sind durch die zuverlässige Fehlerdiagnose beim Betreiben des Fahrzeugs geringere Anforderungen an das Fahrzeug zum Einhalten der Fail-Operational-Strategie, insbesondere eine geringere Überauslegung des Antriebssystems zur Einhaltung von Sicherheitsreserven, erforderlich.

Die folgenden weiteren erfindungsgemäßen Aspekte weisen die vorteilhaften Ausgestaltungen und Weiterbildungen mit den vorstehend genannten Merkmalen sowie die generellen Vorteile des erfindungsgemäßen Verfahrens und die jeweils damit verbundenen technischen Effekte auf. Zur Vermeidung von Wiederholungen wird deshalb auf eine erneute Aufzählung verzichtet.

Gemäß einem weiteren Aspekt betrifft die vorliegende Erfindung ein Steuergerät eines Fahrzeugs. Das Steuergerät ist eingerichtet, ein Verfahren gemäß der vorliegenden Erfindung auszuführen. Bevorzugt umfasst das Steuergerät einen Dateneingang, einen Datenausgang und eine Auswerteeinheit. Das Steuergerät ist dabei eingerichtet, in Verbindung mit dem Dateneingang die Notwendigkeit des Testens zu erkennen und im Ansprechen darauf in Verbindung mit dem Datenausgang das erste Solldrehmoment an der ersten Antriebsmaschine abzurufen. Außerdem ist das Steuergerät eingerichtet, im Ansprechen darauf das erste Istdrehmoment der ersten Antriebsmaschine in Verbindung mit dem Dateneingang zu ermitteln. Darüber hinaus ist die Steuereinheit eingerichtet, in Verbindung mit der Auswerteeinheit den Soll-Ist-Vergleich des ersten Istdrehmoments und des ersten Solldrehmoments durchzuführen und basierend darauf zu erkennen, ob ein Defekt des Antriebssystems vorliegt.

Ein noch weiterer Aspekt der Erfindung betrifft ein Fahrzeug, welches ein vorstehend genanntes Steuergerät umfasst. Bei dem Fahrzeug handelt es sich vorzugsweise um ein Landfahrzeug, beispielsweise einen Pkw oder einen Lkw. Besonders bevorzugt ist das Fahrzeug dabei ein Hybridfahrzeug oder ein Brennstoffzellenfahrzeug oder ein Elektrofahrzeug.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine vereinfachte schematische Ansicht eines Fahrzeugs, in welchem ein Verfahren zum Betreiben des Fahrzeugs gemäß einem bevorzugten Ausführungsbeispiel der Erfindung ausgeführt wird,
- Figur 2: eine Abfolge von Verfahrensschritten des Verfahrens gemäß dem bevorzugten Ausführungsbeispiel, und
- Figur 3: einen zeitlichen Drehmomentverlauf während der Durchführung des Verfahrens der Figur 2.

### Ausführungsform der Erfindung

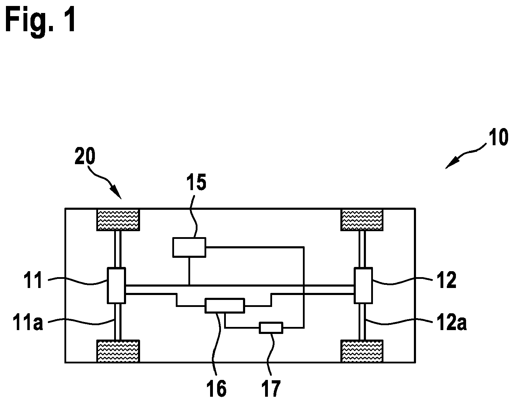

Die Figur 1 zeigt eine vereinfachte schematische Ansicht eines Fahrzeugs 10 bei welchem ein Verfahren 200 zum Betreiben des Fahrzeugs 10 gemäß einem bevorzugten Ausführungsbeispiel der Erfindung ausgeführt wird. Das Fahrzeug 10 wird dabei in einem vollständig autonomen Fahrbetrieb betrieben bei welchem das Fahrzeug 10 selbst fährt und ein Eingriff eines Fahrers nicht erforderlich ist.

Bei dem Fahrzeug 10 handelt es sich um ein Elektroauto, welches zwei identische Elektromotoren als Antriebsmaschinen 11, 12 aufweist. Die beiden Antriebsmaschinen 11, 12 sind jeweils eingerichtet, das Fahrzeug 10 anzutreiben. Hierfür ist eine erste Antriebsmaschine 11 in eine erste Antriebsachse 11a integriert. Eine zweite Antriebsmaschine 12 ist analog in eine zweite Antriebsachse 12a integriert. Die Antriebsmaschinen 11, 12 sind redundant ausgelegt. Das heißt, sofern eine der beiden Antriebsmaschinen 11, 12 ausfällt, kann die andere Antriebsmaschine 11, 12 noch alleine ein ausreichendes Drehmoment aufbringen, um das Fahrzeug 10 weiterhin anzutreiben. Zudem umfasst das Fahrzeug 10 eine Stromversorgungseinrichtung 16, welche eine Batterie umfasst, und welche eingerichtet ist, die beiden Antriebsmaschinen 11, 12 mit Strom zu versorgen. Die Antriebsmaschinen 11, 12, die Antriebsachsen und die Stromversorgungseinrichtung 16 bilden somit ein Antriebssystem 20 des Fahrzeugs 10. Alternativ könnten auch beide Antriebsmaschinen 11, 12 auf einer gemeinsamen Welle sitzen und gemeinsam eine einzige Antriebsachse 11a oder 12a oder ein einziges Differential antreiben.

Weiterhin umfasst das Fahrzeug 10 ein Steuergerät 17. Das Steuergerät 17 ist über einen (nicht dargestellten) Datenausgang mit der Stromversorgungseinrichtung 16 gekoppelt und eingerichtet, die Stromversorgung der beiden Antriebsmaschinen 11, 12 zu steuern.

Ferner umfasst das Fahrzeug 10 eine Sensoreinheit 15, welche mit beiden Antriebsmaschinen 11, 12 und mit dem Steuergerät 17 verbunden ist. Die Sensoreinheit 15 ist eingerichtet, Strom und Spannung, welche den beiden Antriebsmaschinen 11, 12 jeweils bereitgestellt werden, zu erfassen. Über einen (nicht dargestellten) Dateneingang können der erfasste Strom und die erfasste Spannung dem Steuergerät 17 zur Analyse bereitgestellt werden.

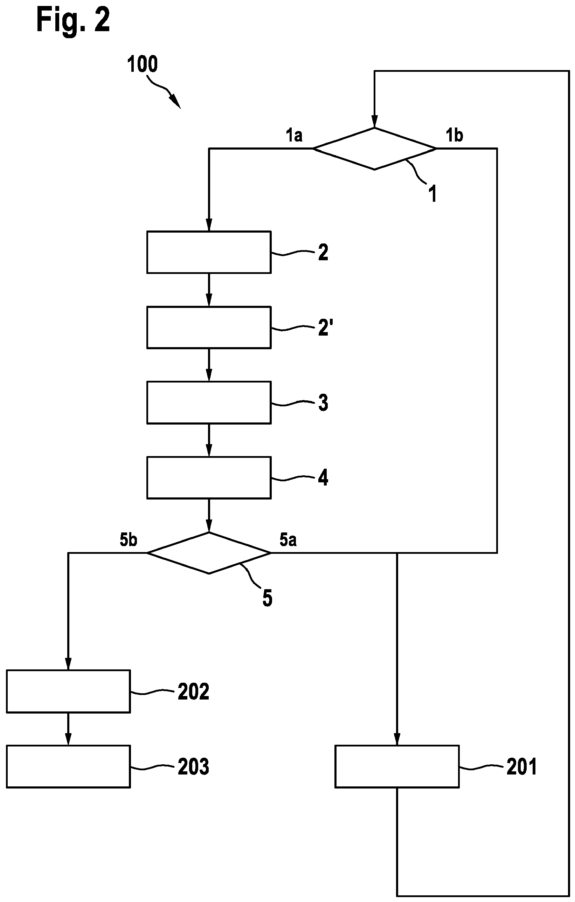

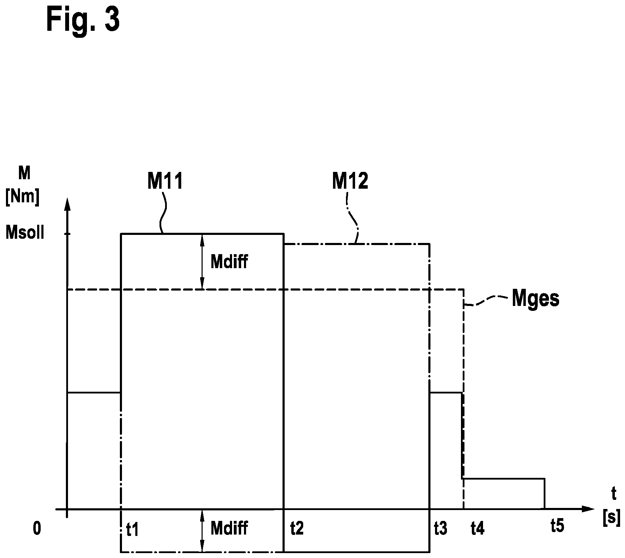

Das Steuergerät 17 ist weiterhin eingerichtet, ein Verfahren 100 zum Testen des Antriebssystems 20 des Fahrzeugs 10 auszuführen, welches ein Teil des Verfahrens 200 zum Betreiben des Fahrzeugs 10 ist. Die Beschreibung des Verfahrens 200 erfolgt nachfolgend in Bezug auf die Figuren 2 und 3.

Die Figur 2 zeigt eine Abfolge der Verfahrensschritte des Verfahrens 200 zum Betreiben des Fahrzeugs 10 und die Figur 3 zeigt einen zeitlichen Drehmomentverlauf, welcher während der Durchführung des Verfahrens 200 der Figur 2 vorliegt. Das Verfahren 100 zum Testen des Antriebssystems 20 des Fahrzeugs 10 wird dabei zwischen Zeitpunkten t1 und t3 ausgeführt.

Zum Vortrieb des Fahrzeugs 10 ist während des Verfahrens 200 ein Gesamt-Drehmoment Mges erforderlich, welches außerhalb des Verfahrens 100 zum Testen durch die beiden Antriebsmaschinen 11, 12 gemeinsam aufgebracht wird (vgl. Figur 3).

Bei dem Verfahren 100 zum Testen des Antriebssystems 20 erfolgt in einem ersten Schritt eine Ermittlung einer Notwendigkeit des Testens 1 inklusive einer Ermittlung einer Fahrbahnbeschaffenheit. Sofern ein entsprechendes Kriterium für diese Notwendigkeit des Testens 1 nicht vorliegt, so lautet die Entscheidung "nein" 1b und das Verfahren 200 wird bei dem Schritt Warten einer vorbestimmten Zeitspanne 201 fortgeführt. In diesem Schritt wird für eine Zeitspanne von drei Sekunden gewartet, bis der nächste Verfahrensschritt ausgeführt wird. Wie in der Figur 2 zu erkennen, wird dabei im Anschluss an das Warten 201 wieder das Verfahren 100 zum Testen des Antriebssystems 20 bei dem Schritt des Ermittelns der Notwendigkeit des Testens 1 erneut begonnen.

Sofern weiterhin ermittelt wurde, dass eine für den Test ungeeignete Fahrbahnoberfläche, beispielsweise eine rutschige Fahrbahn, oder wenn eine fahrdynamische Situation den Test nicht zulässt, so wird trotz der ermittelten 1 Notwendigkeit des Testens der nachfolgende Test des Antriebssystems 20 unterdrückt. Sofern jedoch die Notwendigkeit des Testens 1 erfüllt ist, und Fahrbahnoberfläche und fahrdynamische Situation geeignet sind, dargestellt als Fall 1a, so wird nachfolgend der eigentliche Test des Antriebssystems 20 auf Defekte hinausgeführt. Dazu erfolgt zuerst ab der Zeit t1 ein Abrufen 2 eines Solldrehmoments Msoll an der ersten Antriebsmaschine 11 über eine Zeitspanne von zehn Sekunden.

Das Abrufen 2 des Solldrehmoments Msoll wird dadurch umgesetzt, dass das Steuergerät 17 die Stromversorgungseinrichtung 16 derart ansteuert, also die Betriebsparameter an der ersten Antriebsmaschine 11 so einstellt, dass die erste Antriebsmaschine 11 das theoretische Solldrehmoment Msoll abruft. Das Solldrehmoment Msoll beträgt dabei 100 % eines theoretischen Maximaldrehmoments der ersten Antriebsmaschine 11.

Wie in der Figur 3 zu erkennen, ist das Solldrehmoment Msoll größer als das Gesamt-Drehmoment Mges. Ein Differenzdrehmoment Mdiff aus Gesamt-Drehmoment Mges und Solldrehmoment Msoll wird dabei durch die zweite Antriebsmaschine 12 bereitgestellt. Um das im Vergleich zum Gesamt-Drehmoment Mges höhere Solldrehmoment Msoll an der ersten Antriebsmaschine 11 abrufen zu können, wird die zweite Antriebsmaschine 12 in einem generatorischen Betrieb betrieben, das heißt die zweite Antriebsmaschine 12 bringt das Differenzdrehmoment Mdiff als Bremsmoment auf.

Zum Zeitpunkt t2 erfolgt ein Wechsel beim Abrufen des Solldrehmoments Msoll zwischen den beiden Antriebsmaschinen 11, 12. Das heißt, nun erfolgt das Abrufen 2' des Solldrehmoments Msoll an der zweiten Antriebsmaschine 12 ebenfalls über eine Zeitspanne von zehn Sekunden. Die erste Antriebsmaschine bringt nun entsprechend das Differenzdrehmoment Mdiff auf.

Nachdem an beiden Antriebsmaschinen 11, 12 versucht wurde, jeweils das Solldrehmoment Msoll abzurufen, erfolgt ein Ermitteln 3 eines Istdrehmoments M11, M12 jeweils der beiden Antriebsmaschinen 11, 12 durch Plausibilisierung der beiden Antriebsmaschinen 11, 12 gegeneinander. Hierfür werden durch die Sensoreinheit 15 jeweils die während des jeweiligen Abrufens 2, 2' des Solldrehmoments Msoll tatsächlich an den Antriebsmaschinen 11, 12 anliegenden Ströme und Spannungen erfasst. Diese Plausibilisierung erfolgt dabei unter der Annahme, dass nicht beide Antriebsmaschinen 11, 12 gleichzeitig einen Defekt aufweisen, sondern dass zumindest eine der beiden Antriebsmaschinen 11, 12 fehlerfrei ist. Somit kann mittels der Plausibilisierung festgestellt werden, ob die beiden Antriebsmaschinen 11, 12 eine identische Betriebscharakteristik aufweisen, oder ob diese voneinander abweicht. Hieraus kann dann darauf geschlossen werden, ob die tatsächlichen Istdrehmomente M11, M12 der beiden Antriebsmaschinen 11, 12 jeweils dem Solldrehmoment Msoll entsprechen, oder ob eines der Istdrehmomente M11, M12 von dem Solldrehmoment M12 abweicht.

Im Ansprechen auf die Ermittlung 3 der beiden Istdrehmomente M11, M12 der Antriebsmaschinen 11, 12, wird ein Soll-Ist-Vergleich 4 der Istdrehmomente M11, M12 mit dem Solldrehmoment durchgeführt. Im Anschluss darauf erfolgt ein Erkennen 5, ob ein Defekt des Antriebssystems 20 vorliegt. Das Erkennen 5, ob ein Defekt vorliegt, erfolgt dabei basierend auf dem Soll-Ist-Vergleich 4.

Sofern festgestellt wird, dass Solldrehmoment Msoll und Istdrehmoment M11, M12 im Wesentlichen identisch sind, fällt der Soll-Ist-Vergleich 4 positiv aus, gezeigt durch den Fall 5a. Dann wird das Verfahren 200 zum Betreiben des Fahrzeugs 10 bei dem Schritt Warten der vorbestimmten Zeitspanne 201 fortgeführt.

Fällt der Soll-Ist-Vergleich 4 negativ aus, also, wenn Solldrehmoment Msoll und Istdrehmoment M11, M12 deutlich voneinander abweichen, tritt der Fall 5b ein und das Verfahren 200 wird mit dem Schritt Einleiten eines Notbetriebs des Fahrzeugs und Missionsabbruch 202 fortgeführt. Dieser Fall ist in der Figur 3 dargestellt. Wie zu erkennen, ist das zweite Istdrehmoment M12 der zweiten Antriebsmaschine 12 niedriger als das Solldrehmoment Msoll, das heißt die zweite Antriebsmaschine 12 kann das Solldrehmoment Msoll nicht bereitstellen.

Sofern der Fall 5b der Figur 2 eintritt, also, dass der Soll-Ist-Vergleich 4 negativ ausfällt, so wird im Ansprechen darauf ein Notbetrieb des Fahrzeugs 10 eingeleitet 202, bei welchem die Geschwindigkeit des Fahrzeugs 10 stark reduziert und vor allem das Gesamt-Drehmoment Mges der beiden Antriebsmaschinen 11, 12 zum Zeitpunkt t4 auf 10% des vorherigen Gesamt-Drehmoments Mges reduziert wird. Anschließend erfolgt ein Einleiten eines vordefinierten Missionsabbruchs 203, bei welchem eine nächstgelegene sichere Parkposition angefahren und das Fahrzeug 10 zum Zeitpunkt t5 schließlich gestoppt wird. Dadurch wird die Wahrscheinlichkeit eines Komplettausfalls des Antriebssystems 20 und somit eines Liegenbleibens des Fahrzeugs 10 verringert.

Es sei angemerkt, dass das Antriebssystem 20 des Fahrzeugs 10 auch weitere, nicht dargestellte Elemente umfassen kann, wie beispielsweise Getriebe. Weiterhin sei angemerkt, dass das Verfahren 100 zum Testen nicht nur, wie dargestellt, einmal ausgeführt werden kann, sondern dass dieses vorzugsweise auch mehrmals hintereinander ausgeführt werden kann, um einen Defekt sicher festzustellen und um die Erkennung des Defekts durch Wiederholen des Tests zu verifizieren.

## Patentansprüche

1. Verfahren zum Testen eines Antriebssystems (20) eines Fahrzeugs (10), insbesondere eines Hybridfahrzeugs oder eines Brennstoffzellenfahrzeugs oder eines Elektrofahrzeugs,
wobei das Fahrzeug eine Mehrzahl von Antriebsmaschinen (11, 12) aufweist,
umfassend die Schritte:
- Ermitteln (1) einer Notwendigkeit des Testens,
- Abrufen (2) eines ersten Solldrehmoments (Msoll) an einer ersten Antriebsmaschine (11),
- Ermitteln (3) eines ersten Istdrehmoments (M11) der ersten Antriebsmaschine (11),
- Durchführen eines Soll-Ist-Vergleichs (4) des ersten Istdrehmoments (M11) mit dem ersten Solldrehmoment (Msoll), und
- Erkennen (5), ob ein Defekt des Antriebssystems (20) vorliegt, basierend auf dem Soll-Ist-Vergleich (4).

2. Verfahren nach Anspruch 1, wobei das Verfahren während eines Fahrbetriebs des Fahrzeugs (10) ausgeführt wird.

3. Verfahren nach einem der vorhergehenden Ansprüche, wobei das erste Solldrehmoment (Msoll) mindestens 75%, insbesondere mindestens 90%, besonders bevorzugt 100%, eines theoretischen Maximaldrehmoments der ersten Antriebsmaschine (11) entspricht.

4. Verfahren nach einem der vorhergehenden Ansprüche, wobei das Erkennen des Defekts (5) basierend auf einer Abweichung von mindestens 10%, insbesondere mindestens 5%, besonders bevorzugt mindestens 2%, beim Soll-Ist-Vergleich (4) erfolgt.

5. Verfahren nach einem der vorhergehenden Ansprüche,
- wobei ein Gesamt-Drehmoment (Mges) definiert ist, welches in einer Fahrsituation zum Vortrieb des Fahrzeugs (10) erforderlich ist, und
- wobei ein Differenzdrehmoment (Mdiff), welches als Differenz aus Gesamt-Drehmoment (Mges) und erstem Solldrehmoment definiert ist, durch die restlichen Antriebsmaschinen (12) bereitgestellt wird.

6. Verfahren nach einem der vorhergehenden Ansprüche, wobei das Abrufen (2) des ersten Solldrehmoments (Msoll) durch Betreiben einer zweiten Antriebsmaschine (12) in einem generatorischen Betrieb erfolgt.

7. Verfahren nach einem der vorhergehenden Ansprüche,
- wobei das Solldrehmoment (Msoll) abwechselnd an jeder der Antriebsmaschinen (11, 12) abgerufen wird,
- wobei für jede der Antriebsmaschinen (11, 12) ein Soll-Ist-Vergleich (4) eines Istdrehmoments (M11, M12) der jeweiligen Antriebsmaschine (11, 12) mit dem Solldrehmoment (Msoll) durchgeführt wird, und
- wobei basierend auf jedem der Soll-Ist-Vergleiche (4) jeweils erkannt wird, ob ein Defekt des Antriebssystems (20) vorliegt.

8. Verfahren nach Anspruch 7, wobei das Ermitteln (3) des Istdrehmoments (M11, M12) mittels Plausibilisierung von zumindest zwei Antriebsmaschinen (11, 12) gegeneinander erfolgt.

9. Verfahren nach einem der vorhergehenden Ansprüche, wobei das Ermitteln (3) des Istdrehmoments (M11, M12) mittels:
- einer Berechnung mit einem Maschinenmodell, und/oder
- einer Erfassung mittels eines Sensors, und/oder
- einer Erfassung eines Stroms und/oder einer Spannung an der entsprechenden Antriebsmaschine erfolgt.

10. Verfahren nach einem der vorhergehenden Ansprüche,
- wobei das Durchführen des Verfahrens (100) über eine vordefinierte Zeitspanne erfolgt, und
- wobei das Ermitteln (1) der Notwendigkeit des Testens in vordefinierten, insbesondere regelmäßigen oder unregelmäßigen, Zeitabständen und/oder ereignisbasiert erfolgt.

11. Verfahren nach einem der vorhergehenden Ansprüche, ferner umfassend den Schritt:
- Ermitteln einer Fahrbahnbeschaffenheit, insbesondere mittels eines Fahrdynamikregelungssystems,
- wobei im Ansprechen auf eine Ermittlung (1) der Notwendigkeit des Testens eine Unterdrückung des Tests des Antriebsstrangs erfolgt, sofern eine kritische Fahrbahnbeschaffenheit, insbesondere eine glatte oder rutschige Fahrbahn, vorliegt.

12. Verfahren zum Betreiben eines Fahrzeugs (200), insbesondere eines Hybridfahrzeugs oder eines Elektrofahrzeugs, umfassend die Schritte:
- Durchführen des Verfahrens (100) zur Überwachung eines Antriebssystems (20) eines Fahrzeugs (10) nach einem der vorhergehenden Ansprüche, und sofern ein im Antriebsstrang (20) vorliegender Defekt erkannt wird (5a):
- Einleiten (202) eines Notbetriebs des Fahrzeugs (10), und
- insbesondere Einleiten eines vordefinierten Missionsabbruchs (203) eines autonomen Fahrbetriebs des Fahrzeugs (10).

13. Steuergerät eines Fahrzeugs (10), wobei das Steuergerät (17)
- einen Dateneingang,
- einen Datenausgang und
- eine Auswerteeinheit aufweist, und eingerichtet ist, ein Verfahren nach einem der vorhergehenden Ansprüche durchzuführen.

14. Fahrzeug, insbesondere Hybridfahrzeug oder Brennstoffzellenfahrzeug oder Elektrofahrzeug, umfassend ein Steuergerät (17) nach Anspruch 13.
